# DEMANDE DE BREVET EUROPEEN

(11) **EP 1 333 671 A1**
(43) Date de publication de la demande: **06.08.2003**
(21) Numéro de dépôt: 03075107.7
(22) Date de dépôt: 14.01.2003
(51) Int. Cl.: H04N 5/445

(54) **Dispositif d'interface destiné à être utilisé avec un dispositif de restitution de contenu multimédia pour faire des recherches sur un contenu multimédia en cours de restitution**

(30) Priorité: 22.01.2002 FR 0200769
(71) Demandeur: Koninklijke Philips Electronics N.V., 5621 BA Eindhoven (NL)
(72) Inventeur: Mory, Benoit, 75008 Paris (FR); Laffargue, Franck, 75008 Paris (FR); Santini, Nicolas, 75008 Paris (FR)
(74) Mandataire: de la Fouchardière, Marie-Noelle

(57) **Abrégé**

L'invention propose un dispositif d'interface avec écran destiné à être utilisé avec un dispositif de restitution de contenu multimédia (par exemple une télévision) pour faire des recherches sur un contenu multimédia en cours de restitution.
Le dispositif d'interface selon l'invention, permet à l'utilisateur de naviguer dans un historique des entités du contenu multimédia qui ont déjà été restituées pour sélectionner une entité sur laquelle il souhaite faire une recherche complémentaire. Une question est alors formulée automatiquement et envoyée à un moteur de recherche. Les propositions de résultat de recherche sont transmises au dispositif d'interface où elles sont affichées. L'utilisateur peut sélectionner un résultat de recherche pour affichage.

## Description

### Domaine de l'invention

L'invention concerne un équipement électronique comportant un dispositif de restitution d'entités multimédia, des moyens de formulation d'une question destinée à être utilisée pour faire une recherche, à partir d'une demande de recherche émanant d'un utilisateur, et des moyens de connexion à un réseau de transport pour transmettre ladite question, recevoir des propositions de résultat de recherche, transmettre une demande de résultat de recherche émanant de l'utilisateur, et recevoir le résultat de recherche demandé.

L'invention concerne aussi un dispositif d'interface destiné à fonctionner avec un dispositif de restitution d'entités multimédia.

Elle concerne aussi un système comportant au moins un réseau de transport, un équipement électronique du type décrit plus haut, un moteur de recherche et un serveur. L'invention s'applique notamment à la télévision.

### Arrière plan technologique de l'invention

La demande de brevet européen EP 1094406A2 décrit un système de récupération d'informations dans lequel des requêtes formulées oralement par un utilisateur sont analysées pour générer une question qui est transmise à un moteur de recherche via le réseau Internet. Ce système permet par exemple à un téléspectateur d'obtenir directement, à partir de sa télévision, des informations complémentaires sur un programme qu'il est en train de visualiser. Les résultats de recherche sont affichés sur l'écran de télévision, ou délivrées sous forme de message vocal synthétisé.

### Résumé de l'invention

L'invention a notamment pour but de proposer une autre solution permettant à un utilisateur d'un dispositif de restitution d'entités multimédia, par exemple à un téléspectateur, d'obtenir des informations supplémentaires sur les entités multimédia restituées.

Pour cela, un équipement selon l'invention et tel que décrit dans le paragraphe introductif est caractérisé en ce qu'il comporte un dispositif d'interface comportant un écran d'affichage, un organe d'interaction avec l'utilisateur, et des moyens de communication avec ledit dispositif de restitution pour:
- recevoir et afficher des premières données représentatives de l'entité multimédia en cours de restitution,
- permettre à un utilisateur de naviguer dans un historique des premières données reçues pour demander une recherche relative à une entité multimédia,
- recevoir et afficher des deuxièmes données représentatives d'une ou plusieurs propositions de résultat de recherche,
- permettre à l'utilisateur de naviguer parmi lesdites deuxièmes données pour demander un résultat de recherche,
- recevoir et afficher ledit résultat de recherche.

L'invention propose donc à l'utilisateur un dispositif d'interface distinct du dispositif de restitution qui lui permet de sélectionner une entité multimédia déjà restituée afin de demander une recherche relative à cette entité multimédia. Les propositions de résultat de recherche et les résultats de recherche sélectionnés par l'utilisateur sont affichés sur le dispositif d'interface et non pas sur le dispositif de restitution, ce qui évite de perturber d'autres utilisateurs potentiels du dispositif de restitution.

Pour que l'interface soit conviviale, lesdites premières et secondes données comportent du texte et/ou des images. Ledit texte et/ou lesdites images sont extraits d'un ou plusieurs fichiers décrivant lesdites entités multimédia.

Par exemple le texte est extrait d'un premier fichier, qui est écrit dans un langage de balisage et qui contient des descriptions relatives à plusieurs entités multimédia (par exemple un fichier MPEG-7). Et les images sont des images clés associées à une entité multimédia, extraites d'un second fichier qui est un fichier d'images vers lequel pointent des descriptions dudit premier fichier.

Afin d'utiliser au mieux à tout instant la surface d'écran disponible, lesdites images sont avantageusement affichées dans une première partie d'écran, au moins un texte associé à une desdites images est avantageusement affiché dans une seconde partie d'écran, et une entité multimédia ou un résultat de recherche décrit par ledit texte est avantageusement affiché en remplacement dudit texte dans ladite seconde partie d'écran. De plus, lesdites deuxièmes données sont avantageusement affichées à la place desdites premières données.

Dans un premier mode de réalisation, le dispositif d'interface selon l'invention comporte des moyens de formulation d'une question destinée à être utilisée pour traiter ladite demande de recherche, et des moyens de connexion à un réseau de transport pour transmettre ladite question, recevoir lesdites propositions de résultat de recherche, transmettre ladite demande de résultat de recherche, et recevoir le résultat de recherche demandé.

Dans un deuxième mode de réalisation, les moyens de formulation d'une question destinée à être utilisée pour traiter ladite demande de recherche, et les moyens de connexion à un réseau de transport pour transmettre ladite question, recevoir lesdites propositions de résultat de recherche, transmettre ladite demande de résultat de recherche, et recevoir le résultat de recherche demandé, sont contenus dans le dispositif de restitution. Ce deuxième mode de réalisation permet de limiter la charge de calcul du dispositif d'interface.

Seul ce deuxième mode de réalisation sera décrit en détails dans la suite de la description.

### Brève description des dessins

D'autres détails et avantages de l'invention apparaîtront dans la description qui va suivre, faite en regard des dessins annexés donnés à titre d'exemples non limitatifs :
- la figure 1 est un schéma d'un exemple de système selon l'invention,
- les figures 2 à 4 représentent différents affichages sur l'écran d'un dispositif d'interface selon l'invention.

### Description de l'invention

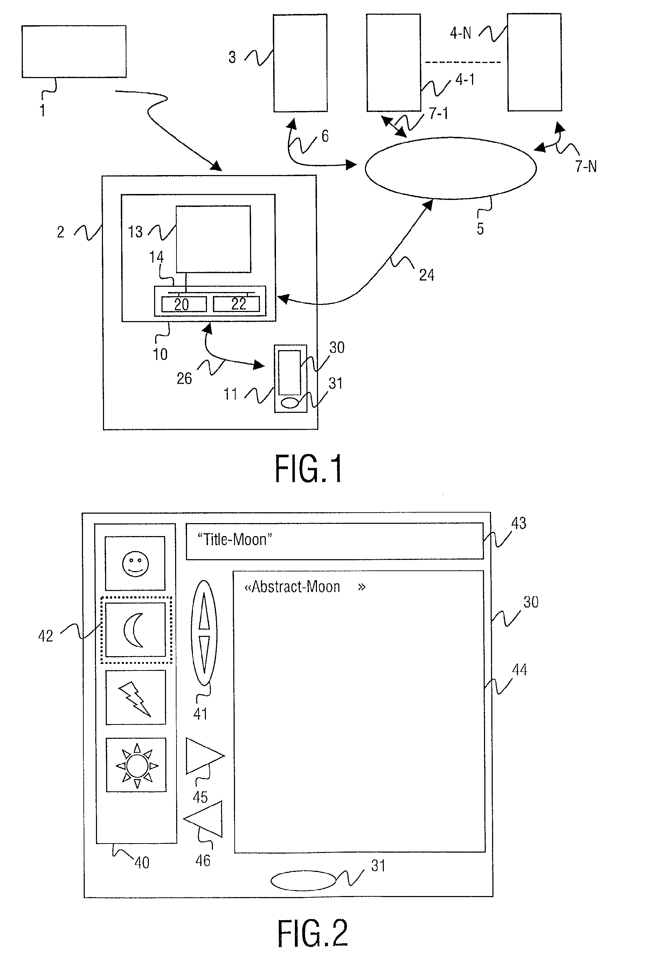

Sur la figure 1, on a représenté un exemple de système selon l'invention. Le système de la figure 1 comporte un diffuseur 1 destiné à diffuser des contenus multimédia contenant une ou plusieurs entités multimédia, un équipement 2 destiné à recevoir un contenu multimédia diffusé par le diffuseur 1, un moteur de recherche 3, des serveurs 4-1 à 4-N, et un réseau de transport 5. Le réseau de transport 5 est par exemple constitué par le réseau Internet.

Le moteur de recherche 3 et les serveurs 4-1 à 4-N sont dotés de moyens de connexion au réseau de transport 5, référencés 6 et 7-1 à 7-N respectivement.

Le contenu multimédia est par exemple un programme de télévision, typiquement un programmes de nouvelles qui contient une pluralité de sujets, chaque sujet correspondant à une entité multimédia.

L'équipement 2 comporte un dispositif 10 de restitution de contenu multimédia et un dispositif d'interface 11. Dans l'exemple décrit ici, le dispositif 10 de restitution de contenu comporte une télévision 13 et un décodeur 14. Le décodeur 14 comporte outre des moyens classiques 20 de décodage des contenus multimédia diffusés, des moyens 22 de formulation d'une question destinée à être utilisée pour traiter une demande de recherche, et des moyens 24 de connexion au réseau de transport 5 pour transmettre une question, recevoir des propositions de résultat de recherche, transmettre une demande de résultat de recherche, et recevoir le résultat de recherche demandé.

Le décodeur 14 et le dispositif d'interface 11 sont dotés de moyens de communication 26 pour s'échanger des données. Avantageusement, ces moyens de communication 26 sont des moyens de communication sans fil.

Le dispositif d'interface 11 comporte aussi un écran d'affichage 30 et un organe 31 d'interaction avec l'utilisateur (par exemple du type souris, ou du type stylet si l'écran 30 est un écran tactile).

Conformément à l'invention, le dispositif d'interface 11 est prévu pour:
- recevoir des premières données représentatives de l'entité multimédia en cours de restitution, en provenance du dispositif de restitution 10,
- afficher lesdites premières données,
- permettre à un utilisateur de naviguer dans un historique des premières données reçues pour demander une recherche relative à une entité multimédia,
- recevoir des deuxièmes données représentatives d'une ou plusieurs propositions de résultat de recherche, en provenance du dispositif de restitution 10,
- afficher lesdites deuxièmes données,
- permettre à l'utilisateur de naviguer parmi lesdites deuxièmes données pour demander un résultat de recherche,
- recevoir ledit résultat de recherche, en provenance dudit dispositif de restitution,
- afficher ledit résultat de recherche.

Dans l'exemple décrit ici, le diffuseur 1 diffuse, en plus des contenus multimédia, un ou plusieurs fichiers associés aux dits contenus multimédia et décrivant lesdits contenus multimédia. Ces fichiers regroupent des metadonnées relatives à un contenu multimédia déterminé. Par exemple pour un contenu multimédia donné, le diffuseur 1 transmet un fichier de type MPEG-7 qui contient des descriptions relatives à une ou plusieurs entités du contenu multimédia, et un fichier d'images qui contient une image (ou « key-frame »en anglais) pour chaque entité multimédia. Le fichier MPEG-7 contient notamment pour chaque entité multimédia une description instance du descripteur MPEG-7 « MediaLocator » qui contient un pointeur vers la partie du fichier d'images qui contient l'image représentative de l'entité multimédia. Le fichier MPEG-7 contient également pour chaque entité multimédia une description instance du descripteur MPEG-7 « Title » et une description instance du descripteur MPEG-7 « Abstract ».

Par exemple, les premières données relatives à une entité multimédia, qui sont reçues et affichées par le dispositif d'interface 11, sont constituées par :
- l'image représentative de ladite entité multimédia,
- le texte qui est contenu dans la description instance du descripteur MPEG-7 « Title », relative à ladite entité multimédia,
- et le texte qui est contenu dans la description instance du descripteur MPEG-7 « Abstract », relative à ladite entité multimédia.

Avantageusement, lorsque le dispositif de restitution 10 restitue une entité multimédia d'un contenu multimédia, il extrait du fichier MPEG-7 et du fichier d'image associé audit contenu multimédia, les premières données qui sont relatives à l'entité multimédia en cours de restitution. Et il les transmet au dispositif d'interface 11.

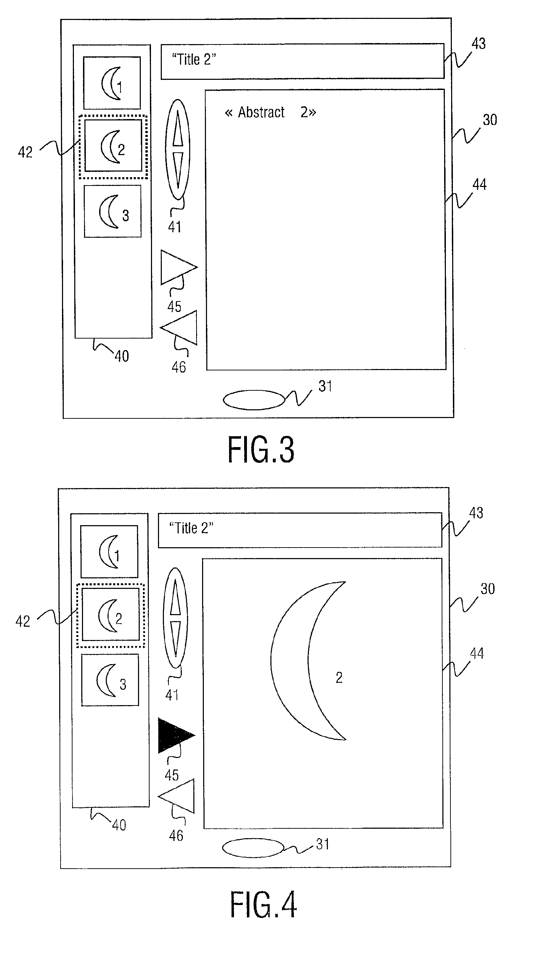

Le dispositif d'interface 11 affiche un historique des premières données qu'il a reçues. Par exemple cet historique est constitué par les images représentatives des entités multimédia pour lesquelles des premières données ont été reçues. Sur la figure 2, ces images sont présentées en ligne. Cette présentation en ligne des images occupe une première partie 40 de l'écran 30. L'organe d'interaction 31 permet de sélectionner une entité multimédia en se déplaçant sur la ligne 40 à l'aide d'un bouton ascenseur référencé 41. Sur les figures 2 et 3, l'image représentative de l'entité couramment sélectionnée est entourée d'un cadre en pointillés référencé 42. Lorsque l'utilisateur actionne le bouton ascenseur 41, le cadre 42 se déplace le long de la ligne 40. Les données textuelles, contenues dans les premières données relatives à l'entité multimédia sélectionnée, sont affichées dans d'autres parties de l'écran. Sur la figure 2, le titre « title » de l'entité multimédia sélectionnée est affiché dans une seconde partie 43 de l'écran 30, et l'abrégé « abstract » de l'entité multimédia sélectionnée est affiché dans une troisième partie 44 de l'écran 30. Lorsque le cadre 42 est déplacé d'une image à une autre dans la ligne d'images, le texte affiché dans les seconde et troisième parties d'écran est modifié en conséquence.

L'organe d'interaction 31 permet aussi d'activer un bouton 45 qui est affiché sur l'écran 30 du dispositif d'interface 11, pour demander une recherche relative à l'entité multimédia couramment sélectionnée.

Lorsque l'utilisateur demande une recherche, une question est formulée par le dispositif de restitution 10. Avantageusement, la question est formulée automatiquement, par exemple en utilisant un procédé de formulation d'une question tel que décrit dans la demande de brevet français n°0111184 non encore publiée déposée le 28.08.2001 par la société Koninklijke Philips Electronics N.V. Cette demande de brevet décrit un procédé de formulation automatique d'une question destinée à être transmise à un moteur de recherche, lors de la restitution d'un contenu multimédia qui est décrit dans un document contenant des descriptions (par exemple un fichier MPEG-7). Ce procédé comporte les étapes suivantes :
- une étape de sélection, par l'utilisateur, dans le contenu multimédia en cours de restitution,
- une étape d'extraction pour extraire du contenu multimédia une information de contexte relative à ladite sélection (par exemple, le temps de lecture courant),
- une étape de récupération d'une ou plusieurs descriptions, dans le document décrivant le contenu multimédia, à partir de l'information de contexte,
- une étape de formulation automatique de la question à partir des informations récupérées dans le document décrivant le contenu multimédia.

La question formulée est ensuite transmise au moteur de recherche 3. Le moteur de recherche 3 retourne des deuxièmes données représentatives de propositions de résultat de recherche (le nombre de propositions de résultat de recherche est quelconque). Ces deuxièmes données contiennent par exemple des images et/ou du texte. Elles sont par exemple extraites de fichiers MPEG-7 et/ou de fichiers images du type décrit plus haut.

Ces deuxièmes données sont transmises du dispositif de restitution 10 au dispositif d'interface 11. Elles sont affichées par le dispositif d'interface 11. Avantageusement les deuxièmes données sont affichées à la place des premières données, comme indiqué sur la figure 3. Cela signifie que :
- les images représentatives des résultats de recherche sont affichées en ligne dans la première partie 40 de l'écran 30,
- le titre du résultat est affiché dans la deuxième partie 43 de l'écran 30,
- l'abrégé du résultat est affiché dan la troisième partie 44 de l'écran 30.

L'organe d'interaction 31 permet d'actionner le bouton ascenseur 41 pour sélectionner un résultat de recherche. L'utilisateur peut ensuite demander le résultat de recherche couramment sélectionné en actionnant le bouton 45. Le dispositif d'interface 11 transmet alors une demande de résultat de recherche au dispositif de restitution 10. Le dispositif de restitution 10 transmet à son tour la demande à l'un des serveurs 4-1 à 4-N via le réseau de transport 5. Le serveur retourne le résultat au dispositif de restitution 10 qui le transmet au dispositif d'interface 11. Le résultat de recherche est alors affiché en remplacement du texte de l'abrégé dans la troisième partie 44 de l'écran 30, comme indiqué sur la figure 4.

A tout moment l'utilisateur peut sélectionner un autre résultat de recherche dans la ligne d'images 40. Le texte affiché dans les deuxième et troisième parties d'écran 43 et 44 est mis à jour conformément à la sélection faite par l'utilisateur. Et lorsque le dispositif d'interface reçoit le nouveau résultat de recherche, il l'affiche en remplacement de l'abrégé dans la troisième partie d'écran 44.

Avantageusement un bouton de retour 46 est prévu pour permettre à l'utilisateur de retourner à l'historique des premières données.

Pendant toutes ces opérations, le contenu multimédia qui est en cours de restitution au niveau du dispositif de restitution 10 continue à être restitué normalement, sans perturbation due aux différentes demandes de recherche.

Dans une variante non représentée de l'invention, les fichiers associés au contenu multimédia en cours de restitution sont fournis par un producteur de metadonnées qui est doté de moyens de connexion au réseau de transport 5.

## Revendications

1. Dispositif d'interface (11) comportant au moins un écran d'affichage (30), un organe (31) d'interaction avec un utilisateur, et des moyens (26) de communication avec un dispositif (10) de restitution d'entités multimédia pour:
- recevoir et afficher des premières données représentatives de l'entité multimédia en cours de restitution,
- permettre à un utilisateur de naviguer dans un historique des premières données reçues pour demander une recherche relative à une entité multimédia,
- recevoir et afficher des deuxièmes données représentatives d'une ou plusieurs propositions de résultat de recherche,
- permettre à l'utilisateur de naviguer parmi lesdites deuxièmes données pour demander un résultat de recherche,
- recevoir et afficher ledit résultat de recherche.

2. Dispositif d'interface selon la revendication 1, **caractérisé en ce que** lesdites premières et secondes données comportent du texte et/ou des images.

3. Dispositif d'interface selon la revendication 2, **caractérisé en ce que** ledit texte et/ou lesdites images sont extraits d'un ou plusieurs fichiers décrivant lesdites entités multimédia.

4. Dispositif d'interface selon la revendication 2, **caractérisé en que** lesdites images sont à afficher dans une première partie d'écran (40), au moins un texte associé à une desdites images est à afficher dans une seconde partie d'écran (44), et une entité multimédia ou un résultat de recherche décrit par ledit texte est à afficher en remplacement dudit texte dans ladite seconde partie d'écran (44).

5. Dispositif d'interface selon la revendication 1, **caractérisé en ce que** lesdites deuxièmes données sont affichées à la place desdites premières données.

6. Dispositif d'interface selon la revendication 1, **caractérisé en ce qu'**il comporte des moyens de formulation d'une question destinée à être utilisée pour traiter ladite demande de recherche, et des moyens de connexion à un réseau de transport pour transmettre ladite question, recevoir lesdites propositions de résultat de recherche, transmettre ladite demande de résultat de recherche, et recevoir le résultat de recherche demandé.

7. Equipement électronique (2) comportant :
- un dispositif (10) de restitution d'entités multimédia,
- des moyens (22) de formulation d'une question destinée à être utilisée pour faire une recherche, à partir d'une demande de recherche émanant d'un utilisateur,
- des moyens (24) de connexion à un réseau de transport pour transmettre ladite question, recevoir des propositions de résultat de recherche, transmettre une demande de résultat de recherche émanant de l'utilisateur, et recevoir le résultat de recherche demandé,
**caractérisé en ce qu'**il comporte un dispositif d'interface comportant un écran d'affichage, un organe d'interaction avec l'utilisateur, et des moyens de communication avec ledit dispositif de restitution pour:
- recevoir et afficher des premières données représentatives de l'entité multimédia en cours de restitution,
- permettre à un utilisateur de naviguer dans un historique des premières données reçues pour demander une recherche relative à une entité multimédia,
- recevoir et afficher des deuxièmes données représentatives d'une ou plusieurs propositions de résultat de recherche,
- permettre à l'utilisateur de naviguer parmi lesdites deuxièmes données pour demander un résultat de recherche,
- recevoir et afficher ledit résultat de recherche.

8. Equipement électronique selon la revendication 7, **caractérisé en ce que** ledit dispositif de restitution comporte des moyens de réception de contenus multimédia comportant une ou plusieurs entités multimédia, et de fichiers associés aux dits contenus, lesdits fichiers contenant lesdites premières données.

9. Système comportant au moins un réseau de transport (5), un équipement électronique (2) selon la revendication 7, un moteur de recherche (3) destiné à recevoir une question, à effectuer une recherche à partir de ladite question, et à retourner une ou plusieurs propositions de résultat de recherche, et un serveur (4-1 à 4-N) destiné à recevoir une demande de résultat de recherche et à fournir un résultat de recherche.

10. Système selon la revendication 9 comportant au moins un diffuseur (1) de contenus pour diffuser des contenus comportant une ou plusieurs entités multimédia, et des fichiers associés aux dits contenus, lesdits fichiers contenant lesdites premières données.
